Europäisches Patentamt

European Patent Office

Office européen des brevets

(11) Veröffentlichungsnummer: **0 306 791 B1**

(12) **EUROPÄISCHE PATENTSCHRIFT**

(45) Veröffentlichungstag der Patentschrift: **08.04.92**

(21) Anmeldenummer: **88114039.6**

(22) Anmeldetag: **29.08.88**

(51) Int. Cl.⁵: **C04B 28/16**, E04F 15/12

(54) **Selbstnivellierende Mörtelmischung.**

(30) Priorität: **08.09.87 DE 3730067**

(43) Veröffentlichungstag der Anmeldung:
**15.03.89 Patentblatt 89/11**

(45) Bekanntmachung des Hinweises auf die
Patenterteilung:
**08.04.92 Patentblatt 92/15**

(84) Benannte Vertragsstaaten:
**AT BE CH DE ES FR GB IT LI NL**

(56) Entgegenhaltungen:
**DE-A- 1 943 634**
**DE-A- 2 351 084**
**US-A- 3 954 492**

(73) Patentinhaber: **BAYER AG**

**W-5090 Leverkusen 1 Bayerwerk(DE)**

(72) Erfinder: **Dobbers, Jürgen, Dr.**
**Carl-Rumpff-Strasse 51**
**W-5090 Leverkusen 1(DE)**
Erfinder: **Reizlein, Karl, Dr.**
**Morgengraben 6**
**W-5000 Köln 80(DE)**
Erfinder: **Bredtmann, Kurt**
**Käthe-Kollwitz-Strasse 10**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine selbstnivellierende Mörtelmischung, enthaltend synthetischen Anhydrit, Anregersalze, Verflüssiger, oberflächenaktive Substanzen und Wasser, die zur Herstellung von Bauteilen wie Estrichen verwendet werden kann.

Bei der Herstellung von Estrichen werden im allgemeinen anorganische Bindemittel, wie natürlicher oder synthetischer Anhydrit, Gips oder Zement, teilweise ungemagert, in der Regel jedoch in Verbindung mit Zuschlagstoffen (Magerungsmitteln), wie Sand und Kies, eventuell unter Verwendung von Zusatzmitteln, wie Verflüssigern, angemischt und verarbeitet.

Aus der deutschen Offenlegungsschrift 2 657 252 ist ein Verahren zur Herstellung einer freifließenden Masse aus Anhydrit, einem Anreger, einem sulfit- oder sulfonsäuremodifizierten Harz auf der Basis eines Amino-s-triazins mit mindestens zwei $NH_2$-Gruppen als Verflüssiger, Nonylphenolhexaglykolether als Netzmittel und Wasser bekannt.

Der Harzanteil beträgt 0,01 bis 0,5 Gew.-%, vorzugsweise 0,2 bis 0,4 Gew.-%, bezogen auf das Bindemittel. Das in den Beispielen 1 bis 3 angegebene Wasser-Feststoff-Verhältnis beträgt ca. 0,3 bis 0,35. Weiterhin geht hervor, daß der verwendete Anhydrit feingemahlener Anhydritbinder ist. Es wird Anhydrit AB 200 nach DIN 4208 (Fassung vom Oktober 1962) - neue Bezeichnung Anhydrit AB 20 nach DIN 4208 (Fassung vom März 1984) - verwendet. Ein Magerungsmittel wird nicht verwendet.

Der nach diesem Verfahren hergestellte Estrich weist eine Reihe von Nachteilen auf. Wie aus "Zement-Kalk-Gips" 17 (1964) 463-466 hervorgeht, tritt bei Estrichen aus feingemahlenem, ungemagertem Anhydritbinder wegen des zu großen Schwind- und Quellmaßes Riß- und Verwerfungsbildung auf.

Diese Rißbildung kann normalerweise durch Zusatz von Magerungsmitteln wie Sand zur Mörtelmischung verhindert werden. Weiterhin werden durch das hohe Wasser-Feststoff-Verhältnis von ca. 0,3 - 0,35 niedrige Festigkeiten und lange Abbindezeiten erhalten.

Aus der DE-PS 1 297 563 ist die Verwendung von Anhydrit mit einer Körnung von 0 - 6 mm und einem Kornanteil von mindestens 30 % unter 0,2 mm mit sulfatischem Anreger und Wasser zur Herstellung von Streb-Streckendämmen und Ausbaupfeilern im Grubenbetrieb bekannt. Das Wasser-Anhydrit-Verhältnis beträgt 0,10 bis 0,16, insbesondere 0,12 bis 0,14. Beim Aushärten vergrößert sich das Volumen des Anhydrits und demzufolge auch die Volumina der aus dem beschriebenen Anhydrit hergestellten Bauteile, was zu Riß- und Verwerfungsbildung führen kann.

Aufgabe war es nun, eine selbstnivellierende - die Masse nivelliert sich unter dem Einfluß der Schwerkraft von selbst in die Horizontale ein, so daß vor oder nach dem Erhärten der Masse keine weiteren Maßnahmen für die Herstellung einer horizontalen Oberfläche getroffen werden müssen - Mörtelmischung auf Anhydritbasis zur Verfügung zu stellen, welche die oben genannten Nachteile nicht aufweist.

Es wurde überraschenderweise gefunden, daß eine selbstnivellierende Mörtelmischung aus synthetischem, grobund feinkörnigem Anhydrit und einigen weiteren an sich bekannten Zusätzen die oben genannten Nachteile nicht aufweist.

Gegenstand der Erfindung ist eine selbstnivellierende Mörtelmischung, enthaltend Anhydrit, Anregersalze, Verflüssiger, oberflächenaktive Substanzen und Wasser, die dadurch gekennzeichnet ist, daß synthetischer, grobkörniger Anhydrit mit einer Kornverteilung, bei der ca. 99,5 Gew.-% der körnung ≤ 8 mm und ca. 75 Gew.-% der Körnung >0,25 mm sind, und gleichzeitig feingemahlener Anhydrit mit einer Kornverteilung, bei der mindestens 80 Gew.-% ≤0,09 mm sind, vorliegen, und daß das Gewichtsverhältnis von synthetischem, grobkörnigen Anhydrit zu synthetischem, feingemahlenem Anhydrit zwischen 1:1 und 6:1, insbesondere 4:1 liegt.

Als feingemahlener Anhydrit findet insbesondere der Anhydritbinder AB20 SYN (DIN 4208) Verwendung.

Bevorzugt wird weiterhin ein Gewichtsverhältnis von Wasser zu synthetischem Anhydrit von 0,1 bis 0,2, vorzugsweise 0,12 bis 0,16.

Der Verflüssiger kann aus einer oder mehreren für diesen Einsatzzweck bekannten Substanzen bestehen und liegt in einer Menge von 0,05 bis 0,5 Gew.-%, vorzugsweise 0,1 bis 0,2 Gew.-%, bezogen auf die Gesamtmenge an synthetischem Anhydrit vor (Ullmanns Enzyklopädie der technischen Chemie 4. Auflage, Bd. 12, S. 306).

Die oberflächenaktive Substanz besteht aus einer oder mehreren für diesen Einsatzzweck bekannten Substanzen und liegt in einer Menge von 0,1 bis 3,0 Gew.-%, vorzugsweise 0,2 bis 1,5 Gew.-%, bezogen auf Verflüssiger, vor (E.Gundermann, Bautenschutz, Chemie und Technologie, Dresden 1967, S. 31 ff. und D.R.Karsa, Special Publication No. 59, Symposium University of Salford, 15th-17th April 1986, Royal Society of Chemistry, p. 33-47).

Als Anregersalz werden eine oder mehrere für diesen Einsatzzweck bekannte Substanzen in einer

EP 0 306 791 B1

Menge von 0,7 Die 1,3 Gew.-%, bezogen auf synthetischen Anhydrit verwendet (Ullmanns Enzyklopädie der technischen Chemie 3. Auflage, Bd. 8, S. 117-118).

Die selbstnivellierende Mörtelmischung wird u. a. als Fließestrich verwendet.

Als besonders vorteilhaft erwies sich eine Mischung bestehend aus 69,6 Gew.-% synthetischem Anhydrit mit einer Kornverteilung, bei der ca. 99,5 Gew.-% der Körnung ≦8 mm und ca. 75 Gew.-% der Körnung >0,25 mm vorliegen, 17,4 Gew.-% synthetischem Anhydritbinder AB20 SYN (DIN 4208) mit 1 Gew.-% Kaliumsulfat als Anreger, 0,13 Gew.-% Verflüssiger, 0,0017 Gew.-% oberflächenaktiver Substanz und ca. 13 Gew.-% Wasser.

Es ist als ausgesprochen überraschend zu bezeichnen, daß durch Ersatz eines Teiles des bisher eingesetzten feingemahlenen Anhydrits durch synthetischen grobkörnigen Anhydrit, bei gleichzeitig wesentlich geringerem Wasser-Anhydrit-Verhältnis, eine selbstnivellierende, für die Herstellung eines Fließestrichs gut geeignete Mörtelmischung erhalten wird, die sich durch so geringe Schwind- und Quellmaße auszeichnet, daß beim Erstarren keine Risse entstehen. Schon bei einem Wasser-Anhydrit-Gewichtsverhältnis von nur 0,12 bis 0,15 wird eine selbstnivellierende Mörtelmischung erhalten, die sich durch hohe Endfestigkeit und kurze Abbindezeit auszeichnet.

Zur Herstellung der Mörtelmischung wird in einem Mischer, z.B. in einem Zwangsmischer mit Pumpe zur Estrichförderung, synthetischer feingemahlener Anhydrit mit einem Anregersalz wie z.B. Natriumsulfat oder Zinksulfat (z.B. Anhydritbinder AB20 SYN, siehe DIN 4208) mit synthetischem, grobkörnigem Anhydrit in einem Gewichtsverhältnis von vorzugsweise 1:4 gemischt. Nach Zugabe von Verflüssiger wie z.B. sulfoniertes Melamin-Formaldehyd-Kondensat, sulfoniertes Ditolylether-Formaldehyd-Kondensat, sulfoniertes Naphthalin-Formaldehyd-Kondensat, sulfoniertes und alkyliertes Phenol-Formaldehyd-Kondensat oder Ligninsulfonat, oberflächenaktiver Substanz wie anionische oder nichtionische Tenside und 12-16 Gew.-% Wasser, bezogen auf Anhydrit erhält man eine pumpfähige und selbstnivellierende Mörtelmischung. Der Verflüssiger und die obenflächenaktive Substanz können als wäßrige Lösung oder Feststoff zugefügt werden.

Die Reihenfolge der einzelnen Komponenten bei dieser Aufzählung ist nicht bindend für die Reihenfolge der Zugabe beim Mischvorgang.

Die Mischung kann in einzelnen Partien oder kontinuierlich hergestellt werden. Es werden normalerweise zunächst alle Komponenten außer Wasser gemischt. Erst an der Baustelle erhält man dann durch die entsprechende Zugabe an Wasser die erfindungsgemäße Mörtelmischung.

Die erfindungsgemäße selbstnivellierende Mörtelmischung soll an Beispielen näher erläutert werden, ohne daß hierin eine Beschränkung zu sehen ist.

Beispiel 1

Synthetischer feingemahlener Anhydrit AB20 SYN (DIN 4208) mit 1 Gew.-% Kaliumsulfat, bezogen auf Anhydrit, als Anreger und synthetischer Anhydrit folgender Körnung

| | |
|---|---|
| < 0,25 mm | 22,09 Gew.-% |
| 0,25 - 0,5 mm | 12,43 Gew.-% |
| 0,5 - 1,0 mm | 21,52 Gew.-% |
| 1,0 - 2,0 mm | 22,55 Gew.-% |
| 2,0 - 3,0 mm | 9,43 Gew.-% |
| 3,0 - 4,0 mm | 4,64 Gew.-% |
| 4,0 - 6,0 mm | 6,47 Gew.-% |
| 6,0 - 8,0 mm | 0,50 Gew.-% |
| ≧ 8,0 mm | 0,37 Gew.-% |

werden im Gewichtsverhältnis 1:4 bis 1:5,5 gemischt. Mit 0,16 Gew.-%, bezogen auf den Anhydrit, eines Gemisches aus 98,7 Gew.-% eines sulfonierten Melamin-Formaldehyd-Kondensates und 1,3 Gew.-% eines Fettalkoholethersulfates ($C_{12}H_{25}O(CH_2CH_2O)_3SO_3NH_4$) und der dem in der nachfolgenden Tabelle angeführten Wasser-Anhydrit-Verhältnis entsprechenden Menge Wasser erhält man selbstnivellierende Mörtelmischungen, deren Festigkeiten in der nachfolgenden Tabelle aufgeführt sind.

Tabelle

| MV | WV | BZ [N/mm$^2$] | | | D[N/mm$^2$] | | |
|---|---|---|---|---|---|---|---|
| | | 3 d | 6 d | 28 d | 3 d | 6 d | 28 d |
| 1:4,0 | 0,142 | 4,04 | 6,05 | 7,48 | 18,78 | 28,42 | 37,82 |
| 1:4,5 | 0,125 | 3,18 | 4,78 | 5,89 | 13,71 | 17,60 | 23,71 |
| 1:5,0 | 0,125 | 3,15 | 4,41 | 5,74 | 12,15 | 18,10 | 24,03 |
| 1:5,5 | 0,128 | 3,14 | 4,56 | 5,86 | 12,16 | 19,13 | 23,45 |

MV = Gewichtsverhältnis Anhydrit AB20 SYN: synthetischem, grobkörnigem Anhydrit der obengenannten Körnung

[DIN 4208: AB20 SYN - synthetischer Anhydritbinder der Festigkeitsklasse AB 20]

WV = Wasser-Anhydrit-Gewichtsverhältnis

BZ = Biegezugfestigkeit nach DIN 4208

D = Druckfestigkeit nach DIN 4208

d = Tage

Beispiel 2

Synthetischer, feingemahlener Anhydrit AB 20 SYN (DIN 4208) mit 1 Gew.-% Kaliumsulfat, bezogen auf Anhydrit, als Anreger und synthetischer Anhydrit der in Beispiel 1 angegebenen Körnung werden im Gewichtsverhältnis 1 : 4 und mit

0,24 Gew.-% eines sulfonierten Ditolylether-Formaldehyd-Kondensates,

0,04 Gew.-% eines sulfomethylierten Phenol-Formaldehyd-Kondensates,

0,032 Gew.-% Tributylphosphat und

0,008 Gew.-% Polyetherpolyol (z.B. ®Desmophen 3400, Bayer AG),

bezogen auf den feingemahlenen Anhydrit, gemischt. Mit 19,2 Gew.-% Wasser, bezogen auf den gesamten Anhydrit, erhält man eine Mörtelmischung, mit der nach DIN 1164, Teil 7, Ausgabe November 1978 Mörtelprismen von 40 mm x 40 mm x 160 mm hergestellt werden. Die so erhaltenen Probekörper werden bei 20°C und 65 % relativer Luftfeuchtigkeit gelagert. Nach 60 Tagen beträgt ihr durchschnittliches Schwinden 0,01 mm/m, nach 100 Tagen 0,015 mm/m.

Beispiel 3

Synthetischer, feingemahlener Anhydrit AB 20 SYN (DIN 4208) mit 1 Gew.-% Kaliumsulfat, bezogen auf Anhydrit, als Anreger und synthetischer Anhydrit der in Beispiel 1 angegebenen Körnung werden im Gewichtsverhältnis 1 : 4 und mit

0,16 Gew.-% eines sulfonierten Melamin-Formaldehyd-Kondensates und

0,0008 Gew.-% eines Fettalkoholethersulfates ($C_{12}H_{25}O(CH_2CH_2O)_2SO_3Na$), bezogen auf den feingemahlenen Anhydrit, gemischt. Mit 18,4 Gew.-% Wasser, bezogen auf den gesamten Anhydrit, erhält man eine Mörtelmischung, die wie in Beispiel 2 auf ihr Schwind- und Quellmaß untersucht wird. Nach 60 Tagen beträgt das durchschnittliche Schwinden 0,03 mm/m, nach 100 Tagen 0,04 mm/m.

Vergleichsbeispiel 1

Synthetischer, feingemahlener Anhydrit AB 20 SYN (DIN 4208 mit 1 Gew.-% Kaliumsulfat, bezogen auf Anhydrit, als Anreger wird mit

0,30 Gew.-% eines sulfonierten Ditolylether-Formaldehyd-Kondensates,

0,05 Gew.-% eines sulfomethylierten und ethoxylierten Phenol-Formaldehyd-Kondensates,

0,04 Gew.-% Tributylphosphat und

0,01 Gew.-% Polyetherpolyol (z.B. ®Desmophen 3400, Bayer AG)

gemischt. Mit 25 Gew.-% Wasser, bezogen auf den Anhydrit, erhält man eine Mörtelmischung, die wie in Beispiel 2 auf ihr Schwind- und Quellmaß untersucht wird. Nach 60 Tagen beträgt das durchschnittliche Schwinden 0,13 mm/m, nach 100 Tagen 0,18 mm/m.

Vergleichsbeispiel 2

Synthetischer, feingemahlener Anhydrit AB 20 SYN (DIN 4208) mit 1 Gew.-% Kaliumsulfat, bezogen auf Anhydrit, als Anreger wird mit

0,2 % eines sulfonierten Melamin-Formaldehyd-Kondensates und

0,001 % eines Fettalkoholethersulfates ($C_{12}H_{25}O(CH_2CH_2O)_2SO_3Na$)

gemischt. Mit 24 Gew.-% Wasser, bezogen auf den Anhydrit erhält man eine Mörtelmischung, die wie in Beispiel 2 auf ihr Schwind- und Quellmaß untersucht wird. Nach 60 Tagen beträgt ihr durchschnittliches Schwinden 0,17 mm/m, nach 100 Tagen 0,18 mm/m.

Vergleichsbeispiel 3

Synthetischer, feingemahlener Anhydrit AB 20 SYN (DIN 4208) mit 1 Gew.-% Kaliumsulfat, bezogen auf Anhydrit, wird mit Baustellensand der Körnung 0 - 8 mm im Gewichtsverhältnis 1 : 2 und mit

0,30 Gew.-% eines sulfonierten Ditolylether-Formaldehyd-Kondensates,

0,05 Gew.-% eines sulfomethylierten und ethoxylierten Phenol-Formaldehyd-Kondensates,

0,04 Gew.-% Tributylphosphat und

0,01 Gew.-% Polyetherpolyol (®Desmophen 3400, Bayer AG),

bezogen auf den Anhydrit, gemischt. Mit 41,5 % Wasser, bezogen auf den Anhydrit, erhält man eine Mörtelmischung, die wie in Beispiel 2 auf ihr Schwind- und Quellmaß untersucht wird. Nach 60 Tagen beträgt ihr durchschnittliches Schwinden 0,01 mm/m, nach 100 Tagen 0,01 mm/m.

Vergleichsbeispiel 4

Synthetischer, feingemahlener Anhydrit AB 20 SYN (DIN 4208) mit 1 Gew.-% Kaliumsulfat, bezogen auf Anhydrit, wird mit Baustellensand der Körnung 0 - 8 mm im Gewichtsverhältnis 1 : 2 und mit

0,2 % eines sulfonierten Melamin-Formaldehyd-Kondensates und

0,001 % eines Fettalkoholethersulfates ($C_{12}H_{25}O(CH_2CH_2O)_2SO_3Na$)

bezogen auf Anhydrit, gemischt. Mit 39,0 Gew.-% Wasser, bezogen auf den Anhydrit, erhält man eine Mörtelmischung, die wie in Beispiel 2 auf ihr Schwind- und Quellmaß untersucht wird. Nach 60 Tagen beträgt ihr durchschnittliches Schwinden 0,05 mm/m, nach 100 Tagen 0,06 mm/m.

## Patentansprüche

1. Selbstnivellierende Mörtelmischung, enthaltend Anhydrit, Anregersalze, Verflüssiger, oberflächenaktive Substanzen und Wasser, dadurch gekennzeichnet, daß grobkörniger, synthetischer Anhydrit mit einer Kornverteilung vorliegt, bei der ca. 99,5 Gew.-% der Körnung ≦8 mm und ca. 75 Gew.-% der Körnung >0,25 mm sind, und gleichzeitig feingemahlener Anhydrit mit einer Kornverteilung vorliegt, bei der mindestens 80 Gew.-% der Körnung ≦0,09 mm sind, und daß das Gewichtsverhältnis grobkörniger, synthetischer Anhydrit zu feingemahlenem, synthetischem Anhydrit 1:1 bis 6:1, vorzugsweise 4:1 ist.

2. Mörtelmischung nach Anspruch 1, dadurch gekennzeichnet, daß das Verhältnis von Wasser zu synthetischem Anhydrit 0,1 bis 0,2, vorzugsweise 0,12 bis 0,19, beträgt.

3. Verwendung der selbstnivellierenden Mörtelmischung nach einem der Ansprüche 1 oder 2 für Fließestrische.

## Claims

1. Self-levelling mortar mixture containing anhydrite, accelerator salts, liquefiers, surface active substances and water, characterised in that it contains coarse grained synthetic anhydrite having a grain size distribution such that about 99.5 % by weight of the particles are ≦ 8 mm and about 75 % by weight of the particles are > 0.25 mm and at the same time fine ground anhydrite having a particle size distribution such that at least 80 % by weight of the particles are ≦ 0.09 mm, and in that the ratio by weight of coarse grained synthetic anhydrite to fine ground synthetic anhydrite is from 1 : 1 to 6 : 1, preferably 4 : 1.

2. Mortar mixture according to claim 1, characterised in that the ratio of water to synthetic anhydrite is from 0.1 to 0.2, preferably from 0.12 to 0.19.

3. Use of the self-levelling mortar mixture according to one of the claims 1 or 2 for fluid flooring compositions.

**Revendications**

1. Mortier auto-nivellant, renfermant de l'anhydrite, des sels activateurs, du fluidifiant, des substances tensioactives et de l'eau, caractérisé en ce que de l'anhydrite synthétique à gros grains, avec une distribution granulométrique dans laquelle env. 99,5 % en poids de la granulation sont égaux ou inférieurs à 8 mm et env. 75 % en poids de la granulation sont supérieurs à 0,25 mm, est présente en même temps que de l'anhydrite à grains fins avec une distribution granulométrique dans laquelle au moins 80 % en poids de la granulation sont égaux ou inférieurs à 0,09 mm, et en ce que le rapport pondéral entre l'anhydrite synthétique à gros grains et l'anydrite synthétique finement moulue est situé dans la plage s'étendant de 1:1 à 6:1 et s'élève de préférence à 4:1.

2. Mortier selon la revendication 1, caractérisé en ce que le rapport entre l'eau et l'anhydrite synthétique est compris dans l'intervalle de 0,1 à 0,2, de préférence de 0,12 à 0,19.

3. Mise en oeuvre du mortier auto-nivellant selon l'une des revendications 1 ou 2 pour la réalisation de l'aire en plâtre fluidifiée.